# EUROPÄISCHE PATENTSCHRIFT

(11) **EP 3 048 404 B1**
(45) Veröffentlichungstag und Bekanntmachung des Hinweises auf die Patenterteilung: **11.04.2018**
(21) Anmeldenummer: 15153620.8
(22) Anmeldetag: 03.02.2015
(51) Int. Cl.: F16C 35/06, F16C 19/54, F27B 3/10, F27B 9/24, F27D 9/00, F27B 9/30

(54) **Tragrollenwechselvorrichtung und Verfahren zum Tragrollenwechsel**
Support roller exchange device and method for exchanging support rollers
Dispositif de changement de rouleau porteur et procédé de changement de rouleau porteur

(30) Priorität: 20.01.2015 EP 15151782; 21.01.2015 EP 15151976; 22.01.2015 EP 15152140; 30.01.2015 EP 15153283
(43) Veröffentlichungstag der Anmeldung: 27.07.2016
(73) Patentinhaber: LOI Thermprocess GmbH, 45141 Essen (DE)
(72) Erfinder: Balster, Frank, 48301 Nottuln (DE); Wachholder, Hortst, 45277 Essen (DE)
(74) Vertreter: Zenz Patentanwälte Partnerschaft mbB

(56) Entgegenhaltungen:
- EP-A1- 1 069 389
- DE-A1-102011 079 771
- JP-A- H0 587 460

## Beschreibung

Die Erfindung betrifft eine Tragrollenwechselvorrichtung zum Wechseln einer Tragrolle eines Rollenherdofens, aufweisend: ein gegenüber der äußeren Umgebungsatmosphäre abdichtbares Gehäuse, das eine an den Rollenherdofen ankoppelbare Schleuse aufweist, über die ein Zugang unter Ausschluss der Umgebungsatmosphäre auf eine zu demontierende Tragrolle des Rollenherdofens vom Inneren des Gehäuses aus möglich ist, und wenigstens eine zum Demontieren und Montieren von Tragrollen ausgebildete Tragrollenhandhabungsvorrichtung, die innerhalb des Gehäuses verfahrbar angeordnet ist und die zumindest teilweise durch die Schleuse hindurch aus dem Gehäuse ausfahrbar ausgebildet ist.

Ferner richtet sich die Erfindung auf ein Verfahren zum Austausch von Tragrollen eines Rollenherdofens mittels einer Tragrollenwechselvorrichtung, wobei die Tragrollenwechselvorrichtung seitlich neben dem Rollenherdofen an die Position der zu demontierenden Tragrolle gefahren wird, die Tragrolle von einer Antriebseinheit entkoppelt wird und dann die Tragrollenwechselvorrichtung an den Rollenherdofen an die zu demontierende Tragrolle herangefahren wird, wobei eine Schleuse der Tragrollenwechselvorrichtung gasdicht an den Rollenherdofen angekoppelt wird, und wobei dann von einer in dem Gehäuse verfahrbar angeordneten Tragrollenhandhabungsvorrichtung die zu demontierende Tragrolle über die Schleuse aus dem Rollenherdofen heraus in das Gehäuse bewegt wird.

Eine Tragrollenwechselvorrichtung der Eingangs bezeichneten Art ist zum Beispiel aus der DE 10 2011 079 771 A1 bekannt, wobei dieser Anmeldung auch ein Verfahren zum Tragrollenwechsel gemäß der Eingangs bezeichneten Art zu entnehmen ist. Diese bekannte Tragrollenwechselvorrichtung ist seitlich neben dem Rollenherdofen verfahrbar und weist eine eingehauste, d.h. in einem Gehäuse der Tragrollenwechselvorrichtung untergebrachte Tragrollenhandhabungsvorrichtung auf. Zum Tragrollenwechsel wird die Tragrollenwechselvorrichtung entlang der Ofenlängsachse verfahren und an der entsprechenden Wechsellage positioniert. Dann wird für den Tragrollenwechsel eine Schleuse der Tragrollenwechselvorrichtung gasdicht an den Rollenherdofen über eine Flanschverbindung angeschraubt, so dass eine gasdichte Isolation zwischen dem Inneren des Gehäuses der Tragrollenwechselvorrichtung und der Umgebung herrscht. Bei einem Tragrollenwechsel fährt eine Lanze der Tragrollenhandhabungsvorrichtung in die hohle Tragrolle ein, um die auszutauschende Tragrolle anzuheben und die Tragrolle aus einer in der Wandung des Rollenherdofens ausgebildeten Öffnung, in welcher die Tragrolle im Betrieb drehbar gelagert ist, herauszuziehen. Die demontierte Tragrolle wird dann gemäß diesem bekannten Stand der Technik in einem Regal innerhalb des Gehäuses abgelegt. Die DE 10 2011 079 771 A1 sieht insbesondere mehrere Regale oder dergleichen vor, die Platz für die Aufnahme einer entsprechenden Anzahl von defekten bzw. demontierten Tragrollen bieten.

Nachteilig bei diesem bekannten Stand der Technik ist, dass nach der Demontage einer Tragrolle durch die Ofenöffnung über die Schleuse des Gehäuses die Ofenatmosphäre mit einer Temperatur von beispielsweise 1000°C in das Innere des Gehäuses vordringt und für eine beträchtliche Temperaturerhöhung der Gehäuseatmosphäre, d.h. der Atmosphäre innerhalb der Tragrollenwechselvorrichtung, sorgt, was für die in und an der Tragrollenwechselvorrichtung installierte Elektronik eine zerstörerische Wirkung hat. Darüber hinaus strahlt die heiße Tragrolle, die aus dem Rollenherdofen demontiert wurde, eine starke Hitze ab, was ebenfalls die Temperatur innerhalb des Gehäuses beträchtlich erhöht.

Der Erfindung liegt die Aufgabe zugrunde eine Lösung zu schaffen, die auf konstruktiv einfache Weise eine Tragrollenwechselvorrichtung bereitstellt, bei welcher die aus dem Stand der Technik bekannten Nachteile vermieden werden und durch die bei einem Tragrollenwechsel die Gefahr einer zu starken Temperaturerhöhung der Gehäuseatmosphäre, durch welche die Elektronik der Tragrollenwechselvorrichtung beschädigt werden könnte, verringert ist.

Bei einer Tragrollenwechselvorrichtung der Eingangs bezeichneten Art wird die Aufgabe erfindungsgemäß dadurch gelöst, dass das Gehäuse einen zur Abkühlung einer demontierten Tragrolle ausgebildeten Abkühlraum aufweist, wobei die wenigstens eine Tragrollenhandhabungsvorrichtung zumindest zwischen einer Wechselposition, in welcher sie durch die Schleuse hindurch eine zu demontierende Tragrolle aus dem Rollenherdofen entnehmen kann, und einer Abkühlposition, in welcher sie die demontierte Tragrolle in dem Abkühlraum positioniert, verfahrbar ausgebildet ist, wobei der Abkühlraum wenigstens eine fluidgekühlte Kühlwand aufweist.

Ferner wird bei einem Verfahren der Eingangs bezeichneten Art die Aufgabe erfindungsgemäß dadurch gelöst, dass die aus dem Rollenherdofen demontierte Tragrolle von der Tragrollenhandhabungsvorrichtung zu einem innerhalb des Gehäuses ausgebildeten Abkühlraum bewegt wird und in dem Abkühlraum positioniert wird.

Im Sinne der Erfindung wird unter einem Abkühlraum ein Raum verstanden, der im Wesentlichen umschlossen ist, zumindest aber von fünf Seitenwänden umschlossen bzw. umgeben ist. Der Abkühlraum wird folglich als ein umschlossener Teilbereich angesehen, der innerhalb des Gehäuses angeordnet und ausgebildet ist.

Vorteilhafte und zweckmäßige Ausgestaltungen und Weiterbildungen der Erfindung ergeben sich aus den Unteransprüchen.

Durch die Erfindung wird auf einfache Weise eine Möglichkeit bereitgestellt, durch welche die Gehäuseatmosphäre auf eine moderate Temperatur gehalten werden kann, um eine Beschädigung der installierten Elektronik zu verhindern. Dadurch, dass die demontierte Tragrolle in dem Abkühlraum innerhalb des Gehäuses positioniert werden kann, erfolgt eine bewusste Anordnung der Tragrolle innerhalb des Gehäuses. So kann der Abkühlraum zum Beispiel in einem gewissen Abstand zu der installierten Elektronik angeordnet sein, so dass die Wärmestrahlung der demontierten Tragrolle keine zerstörerischen Auswirkungen auf die Elektronik hat. Zusätzlich oder alternativ ist es denkbar, dass der Abkühlraum wärmeisolierte Wände aufweist, so dass die Wärmestrahlung der demontierten Tragrolle nur innerhalb des Abkühlraums wirkt. Der Abkühlraum kann aber gemäß einer noch weiteren Alternative auch aktiv gekühlt werden, indem zum Beispiel über ein Gebläse kühle Luft in den Abkühlraum eingeblasen wird. Dadurch, dass der Abkühlraum wenigstens eine fluidgekühlte Kühlwand aufweist, kann eine aktive Abkühlung der heißen Tragrolle, die aus dem Rollenherdofen demontiert wurde, erzielt werden.

Dabei ist es in Ausgestaltung des erfindungsgemäßen Verfahrens von Vorteil, wenn wenigstens eine Wand des Abkühlraumes mit gekühltem Wasser gekühlt wird. Dabei wird das gekühlte Wasser von einem Kühlwasserkreislauf bereitgestellt, der nicht mit dem Ofenkühlsystem verbunden ist, sondern der autark an der Tragrollenwechselvorrichtung installiert ist und über ein Leitungssystem mit den zu kühlenden Wänden verbunden ist.

Statt einer aktiven Kühlung der demontierten Tragrolle durch wenigstens eine fluidgekühlte, insbesondere wassergekühlte, Wand des Abkühlraumes können die Wände auch wärmeisoliert sein, um das Innere des Gehäuses, wie beispielsweise die installierte Elektronik sowie mechanische Komponenten, vor der Wärmestrahlung der heißen Tragrolle zu schützen.

Da die Baugröße der Tragrollenwechselvorrichtung gewissen Einschränkungen unterliegt und nicht beliebig groß gewählt werden darf, ist die Größe des Innenraumes der Tragrollenwechselvorrichtung auf ein Minimum beschränkt, so dass eine effiziente und geschickte Anordnung der einzelnen Komponenten innerhalb des Gehäuses einen hohen Stellenwert genießt. Dementsprechend ist in Ausgestaltung der erfindungsgemäßen Tragrollenwechselvorrichtung vorgesehen, dass wenigstens eine Wand des Abkühlraumes innerhalb des Gehäuses verfahrbar und/oder kippbar ausgebildet ist. Durch diese besondere Ausbildung wenigstens einer Wand des Abkühlraumes ist eine Positionierung einer heißen, demontierten Tragrolle in dem Abkühlraum ohne größere Umstände möglich. Entweder fährt die verfahrbare Wand in eine Position, in welcher sie der Tragrollenhandhabungsvorrichtung mit der demontierten Tragrolle nicht im Fahrweg steht, oder aber die kippbare Wand ist derart ausgebildet, dass sie nach Art einer Tür aufschwenken kann, damit eine heiße Tragrolle in den Abkühlraum eingebracht und dort positioniert werden kann.

Eine besonders effiziente Art der Gestaltung des Innenraumes des Gehäuses und des Abkühlraumes besteht in Ausgestaltung der erfindungsgemäßen Tragrollenwechselvorrichtung darin, dass wenigstens eine Wand des Abkühlraumes mit der wenigstens einen Tragrollenhandhabungsvorrichtung bewegungsgekoppelt ausgebildet ist und zusammen mit der wenigstens einen Tragrollenhandhabungsvorrichtung zumindest zwischen der Wechselposition und der Abkühlposition verfahrbar ist.

Zur Bewegung der Tragrollenhandhabungsvorrichtung innerhalb des Gehäuses sieht die Erfindung in Ausgestaltung der Tragrollenwechselvorrichtung vor, dass die wenigstens eine Tragrollenhandhabungsvorrichtung an einem Querträger bewegbar gelagert ist und entlang des Querträgers in Richtung der Schleuse und von dieser weg verfahrbar ist. Somit kann die Tragrollenhandhabungsvorrichtung zur Demontage einer Tragrolle aus dem Rollenherdofen an die Schleuse gefahren werden, um die zu demontierende Tragrolle zu greifen, und anschließend wieder entlang des Querträgers zurück und von der Schleuse weg gefahren werden, um die Tragrolle aus dem Rollenherdofen durch die Schleuse hindurch in das Gehäuse zu ziehen bzw. zu bewegen. Dabei stellt ein solcher Querträger eine konstruktiv einfache und kostengünstige Lösung dar, eine entsprechende Bewegung der Tragrollenhandhabungsvorrichtung zu realisieren.

Damit die Tragrollenhandhabungsvorrichtung innerhalb des Gehäuses auch parallel zum Rollenherdofen verfahrbar ist, so dass die Demontage einer alten Tragrolle und die Montage einer neuen Tragrolle durchgeführt werden kann, ohne dass dafür das Gehäuse verfahren oder geöffnet werden muss, um die demontierte Tragrolle so zu positionieren, dass sie für die Montage nicht im Wege steht, ist bei der Tragrollenwechselvorrichtung gemäß der Erfindung vorgesehen, dass der die wenigstens eine Tragrollenhandhabungsvorrichtung lagernde Querträger entlang eines Positionswechselträgers verfahrbar gelagert ist, wobei der Positionswechselträger an dem Gehäuse befestigt ist und sich derart zur Schleuse erstreckt, dass der Positionswechselträger den Querträger mit der wenigstens einen Tragrollenhandhabungsvorrichtung parallel zur Schleuse verfahrbar lagert. Insbesondere erstreckt sich der Positionswechselträger senkrecht zu dem Querträger.

Hinsichtlich einer effizienten Nutzung des Innenraumes des Gehäuses sieht die Erfindung in weiterer Ausgestaltung der Tragrollenwechselvorrichtung vor, dass der die wenigstens eine Tragrollenhandhabungsvorrichtung lagernde Querträger in der Abkühlposition außerhalb des Abkühlraumes und/oder unterhalb einer Bodenkühlwand des Abkühlraumes angeordnet ist.

Für einen zeitlich betrachtet besonders schnellen Tragrollenwechsel ist in weiterer Ausgestaltung der erfindungsgemäßen Tragrollenwechselvorrichtung vorgesehen, dass eine erste Tragrollenhandhabungsvorrichtung zur Demontage und Lagerung der demontierten Tragrolle und eine zweite Tragrollenhandhabungsvorrichtung zur Lagerung einer zu montierenden Tragrolle und zur Montage der zu montierenden Tragrolle innerhalb des Gehäuses verfahrbar angeordnet sind, wobei die erste Tragrollenhandhabungsvorrichtung zwischen der Wechselposition und der Abkühlposition verfahrbar ausgebildet ist, und wobei die zweite Tragrollenhandhabungsvorrichtung zwischen einer Warteposition und der Wechselposition verfahrbar ausgebildet ist. Folglich ist der Innenraum des Gehäuses in drei verschiedene Zonen aufgeteilt, wobei lediglich die erste Tragrollenhandhabungsvorrichtung in die Abkühlposition verfahrbar ist, wohingegen lediglich die zweite Tragrollenhandhabungsvorrichtung in die Warteposition verfahrbar ist. Jedoch sind beide Tragrollenhandhabungsvorrichtungen in die Wechselposition verfahrbar ausgebildet. Sie können aber nicht gleichzeitig, sondern nur nacheinander in die Wechselposition verfahren werden.

Die Erfindung sieht in weiterer Ausgestaltung der Tragrollenwechselvorrichtung vor, dass ein die Gehäuseatmosphäre abkühlendes Abkühlsystem vorgesehen ist, das außerhalb des Gehäuses angeordnet und an diesem Gehäuse befestigt ist, wobei das Abkühlsystem die abgekühlte Gehäuseatmosphäre zurück in das Gehäuse leitend ausgebildet ist. Dadurch, dass das Abkühlsystem außerhalb des Gehäuses angeordnet ist, wird kein unnötiger Raum innerhalb des gasdichten Gehäuses beansprucht, so dass das Gehäuse nur Platz für die wesentlichen Komponenten der Tragrollenwechselvorrichtung aufweisen muss. Zusätzlich wird durch das Abkühlsystem erreicht, dass die Atmosphäre keine zerstörerische Wirkung mehr auf die an und in dem Gehäuse installierte Elektronik besitzt.

Dementsprechend ist in Ausgestaltung des erfindungsgemäßen Verfahrens vorgesehen, dass die Gehäuseatmosphäre mit Hilfe eines Abkühlsystems auf eine Temperatur von weniger als 60°C gekühlt wird. Die durch die Schleuse in das Gehäuse gelangende Ofenatmosphäre besitzt durchaus eine Temperatur von 800°C oder sogar 1000°C, so dass die Elektronik des Gehäuses unbedingt durch Kühlung der Gehäuseatmosphäre zu schützen ist.

Damit effektiv eine Ausbreitung der heißen Ofenatmosphäre in dem Gehäuse verhindert wird, sieht die Erfindung in Ausgestaltung der Tragrollenwechselvorrichtung vor, dass das Abkühlsystem kanalförmig ausgebildet ist und an einem ersten Kanalende über eine Öffnung mit dem Inneren des Gehäuses verbunden ist und an einem zweiten Kanalende über eine auf die Schleuse ausgerichtete Mündung mit dem Inneren des Gehäuses verbunden ist. Folglich sorgt die auf die Schleuse gerichtete Mündung des Abkühlsystems dafür, dass der heißen Ofenatmosphäre sofort bei deren Eintritt in das Gehäuse entgegengewirkt wird du kalte bzw. abgekühlte Gehäuseatmosphäre entgegenströmt.

Um die Gehäuseatmosphäre entsprechend abkühlen zu können, ist es von besonderem Vorteil, wenn innerhalb des Abkühlsystems ein die Gehäuseatmosphäre ansaugender und umwälzender Ventilator und/oder ein die angesaugte Atmosphäre abkühlender Wärmetauscher angeordnet sind.

Ferner ist in Ausgestaltung der Tragrollenwechselvorrichtung vorgesehen, dass außerhalb des Gehäuses wenigstens ein Kühlaggregat angeordnet ist, welches ein Kühlfluid zumindest für den Abkühlraum bereitstellt. Auf diese Weise kann ein Kühlkreislauf betrieben werden, der unabhängig von der Ofenkühlung ist.

Schließlich ist in Ausgestaltung des erfindungsgemäßen Verfahrens vorgesehen, dass die innerhalb des Abkühlraumes positionierte Tragrolle gedreht wird. Die demontierte Tragrolle, die heiß ist, bleibt somit in ständiger Rotation, um ein gleichmäßiges Abkühlen zu gewährleisten und um ein nachträgliches Verformen der ausgebauten Tragrolle zu vermeiden.

Die Erfindung richtet sich auch eine Anordnung zum Tragrollenwechsel, die eine Tragrollenwechselvorrichtung nach einem der Ansprüche 1 bis 12 und einen Rollenherdofen umfasst, wobei die Tragrollenwechselvorrichtung auf einer Fahrbühne angeordnet ist, die seitlich zum Rollenherdofen verfahrbar ist, wobei wenigstens ein Kühlaggregat gemeinsam mit der Fahrbühne verfahrbar ausgebildet ist und einen mit der Fahrbühne mitbewegten Kühlkreislauf zumindest für den Abkühlraum bereitstellt.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 in schematischer Draufsicht einen Rollenherdofen und eine erfindungsgemäße Tragrollenwechselvorrichtung, die seitlich an dem Rollenherdofen verfahrbar ausgebildet ist,
Figur 2 eine perspektivische Darstellung der an dem Rollenherdofen angedockten Tragrollenwechselvorrichtung,
Figur 3 eine schematische Darstellung der erfindungsgemäßen Tragrollenwechselvorrichtung in Draufsicht,
Figur 4 eine weitere schematische Darstellung der erfindungsgemäßen Tragrollenwechselvorrichtung in Draufsicht,
Figur 5 eine perspektivische Ansicht auf die Tragrollenwechselvorrichtung mit zum Teil ausgeblendetem Gehäuse,
Figur 6 eine perspektivische Ansicht auf die Tragrollenwechselvorrichtung mit ausgeblendetem Gehäuse,
Figur 7 eine perspektivische Draufsicht auf die Tragrollenwechselvorrichtung nach Demontage einer Tragrolle,
Figur 8 eine perspektivische Detailansicht auf eine demontierte Tragrolle, die in einem Abkühlraum der Tragrollenwechselvorrichtung positioniert ist,
Figur 9 eine perspektivische Ansicht auf den Abkühlraum,
Figur 10 eine weitere perspektivische Ansicht auf die Tragrollenwechselvorrichtung mit ausgeblendetem Gehäuse,
Figur 11 eine schematische seitliche Schnittansicht auf ein Abkühlsystem der Tragrollenwechselvorrichtung und
Figur 12 eine seitliche Ansicht auf die Anordnung aus Rollenherdofen und Tragrollenwechselvorrichtung in schematischer Form.

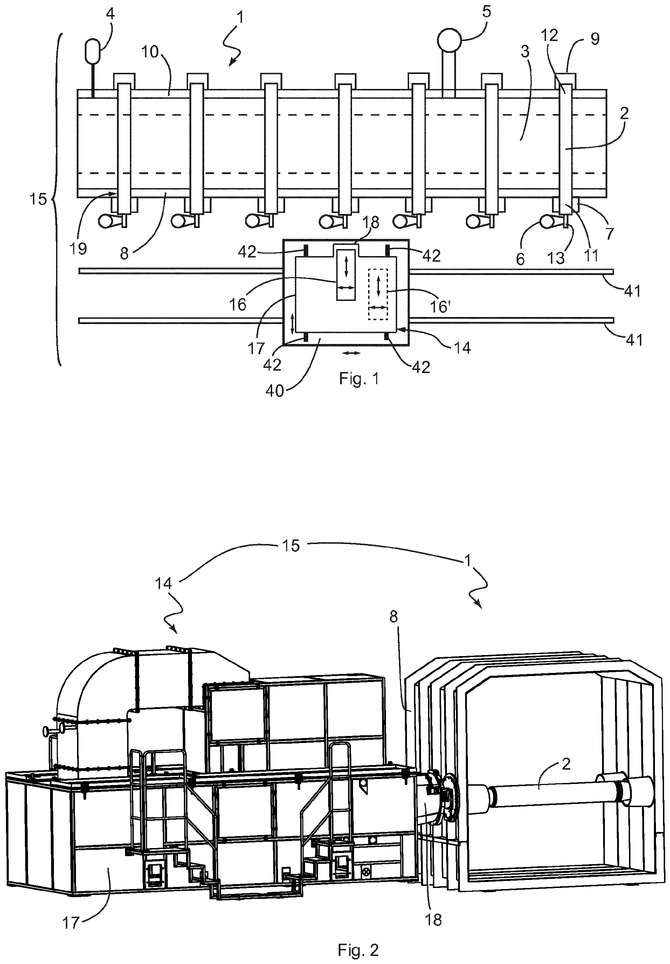

In Figur 1 ist in schematischer Draufsicht ein Rollenherdofen 1 gezeigt, bei dem jeweilige Tragrollen 2 mittels eines jeweiligen Tragrollenlagerungssystems drehbar gelagert sind. In dem in Figur 1 gezeigten Ausführungsbeispiel ist der Rollenherdofen 1 zum kontinuierlichen Wärmebehandeln von Stahlbändern 3 ausgebildet. Figur 1 ist eine exemplarische Darstellung und zeigt lediglich einen Ausschnitt des Rollenherdofens 1. Für diesen Ausschnitt weist der Rollenherdofen 1 sieben Tragrollen 2 auf, wobei aus Gründen der Übersichtlichkeit nur eine der sieben Tragrollen 2 mit verschiedenen Bezugszeichen versehen ist. Der Rollenherdofen 1 ist gegenüber seiner Umgebung hermetisch abgeschlossen und wird unter einer Schutzgasatmosphäre betrieben. Die Tragrollen 2 sind entlang der Längsachse des Rollenherdofens 1 angeordnet und transportieren das mit Wärme zu behandelnde Stahlband 3, wobei der Prozess bei Temperaturen von über 1000°C im Inneren des Rollenherdofens 1 stattfindet. Eine Heizvorrichtung 4 sorgt für die für den Prozess erforderliche Temperatur im Inneren des Rollenherdofens 1, wohingegen eine Schutzgasvorrichtung 5 dafür verantwortlich ist, dass sich im Inneren des Rollenherdofens 1 die gewünschte Schutzgasatmosphäre einstellt. Jede Tragrolle 2 ist außerhalb des Rollenherdofens 1 mit einer Antriebseinheit 6 verbunden, welche die jeweilige Tragrolle 2 rotierend antreibt, um das Stahlband 3 durch den Rollenherdofen 1 zu fördern. Das in den Figuren nicht im Detail dargestellte Lagerungssystem einer jeweiligen Tragrolle 2 umfasst ein erstes Lagerelement 7, welches auf einer ersten Seitenwand 8 des Rollenherdofens 1 angebracht ist und bei einem Tragrollenwechsel von der ersten Seitenwand 8 gelöst werden muss, und ein zweites Lagerelement 9, welches auf einer der ersten Seitenwand 8 gegenüberliegenden, zweiten Seitenwand 10 des Rollenherdofens 1 angebracht ist und bei einem Tragrollenwechsel von der zweiten Seitenwand 10 nicht gelöst werden muss, sondern dort zur Lagerung der neu einzusetzenden Tragrolle 2 verbleibt. Bei dem Lagerungssystem ist eine jeweilige Tragrolle 2 mit ihrem ersten Längsende 11 mittels des ersten Lagerelements 7 und mit ihrem zweiten Längsende 12 mittels des zweiten Lagerelements 9 drehbar im Rollenherdofen 1 gelagert, wobei das erste Lagerelement 7 und das zweite Lagerelement 9 derart gasdicht ausgebildet sind, dass während des Ofenbetriebs kein Schutzgas aus dem Inneren des Rollenherdofens 1 entweichen kann. Von dem ersten Längsende 11 einer jeweiligen Tragrolle 2 aus erstreckt sich ein Wellenzapfen 13, der aus dem jeweiligen ersten Lagerelement 7 nach außen hin hervorsteht und mit der zugeordneten Antriebseinheit 6 antriebsverbunden ist, durch die eine jeweilige Tragrolle 2 im Betrieb des Rollenherdofens 1 gedreht wird. Bei einem Wechsel einer Tragrolle 2 wird zunächst die Antriebseinheit 6 von dem Wellenzapfen 13 gelöst, bevor dann die zu demontierende Tragrolle 2 mitsamt dem ersten Lagerelement 7 vom Rollenherdofen 1 entfernt wird, wohingegen das zweite Lagerelement 9 am Rollenherdofen 1 verbleibt und auch die neu einzusetzende Tragrolle 2 drehbar lagert.

Wie Figur 1 ferner schematisch zeigt, ist seitlich vom Rollenherdofen 1 eine Tragrollenwechselvorrichtung 14 zum Wechseln einer Tragrolle 2 des Rollenherdofens 1 angeordnet, die entlang der ersten Seitenwand 8 des Rollenherdofens 1 und zur Seitenwand 8 hin und von dieser weg verfahrbar ausgebildet ist, um vor einer zu demontierenden Tragrolle 2 positioniert zu werden. Die Tragrollenwechselvorrichtung 14 und der Rollenherdofen 1 bilden eine Anordnung 15 (siehe zum Beispiel Figur 2), die zum Wechseln einer Tragrolle 2 bestimmt ist. Für einen Tragrollenwechsel wird das erste Lagerelement 7 von der ersten Seitenwand 8 gelöst und anschließend die auszuwechselnde Tragrolle 2 mitsamt dem ersten Lagerelement 7 mit Hilfe einer Tragrollenhandhabungsvorrichtung 16 der Tragrollenwechselvorrichtung 14 aus dem Rollenherdofen 1 gezogen. Die Tragrollenwechselvorrichtung 14 umfasst neben der Tragrollenhandhabungsvorrichtung 16 ein gegenüber der äußeren Umgebungsatmosphäre abdichtbares Gehäuse 17, das eine zum Ankoppeln an den Rollenherdofen 1 dienende Schleuse 18 aufweist, über die ein Zugang unter Ausschluss der Umgebungsatmosphäre auf eine zu demontierende Tragrolle 2 von dem Gehäuse 17 aus möglich ist. Die Tragrollenhandhabungsvorrichtung 16 ist in dem Gehäuse 17 derart verfahrbar angeordnet, dass sie zu der Seitenwand 8 hin und von dieser weg sowie seitlich zur Seitenwand 8 bewegbar ist, wie nachstehend noch im Detail erläutert werden wird. Dabei kann eine einzige Tragrollenhandhabungsvorrichtung 16 sowohl zur Demontage einer Tragrolle 2 vom Rollenherdofen 1 als auch zur Montage einer neuen Tragrolle 2 eingesetzt werden. Denkbar ist es aber auch, dass eine erste Tragrollenhandhabungsvorrichtung 16 zur Demontage eingesetzt wird, die anschließend vom Ofen wegbewegt wird und die demontierte Tragrolle 2 stützt, und zur Montage eine zweite Tragrollenhandhabungsvorrichtung 16' verwendet wird, die mit einer zu montierenden Tragrolle 2 bestückt ist, was in Figur 1 schematisch angedeutet ist. Dabei sind die beiden Tragrollenhandhabungsvorrichtungen 16 und 16' innerhalb des gasdichten Gehäuses 17 verfahrbar, vor der Schleuse 18 positionierbar sowie zumindest teilweise durch die Schleuse 18 hindurch aus dem Gehäuse 17 ausfahrbar ausgebildet. Ein solcher Tragrollenwechsel kann somit mit einer oder zwei Tragrollenhandhabungsvorrichtungen 16, 16' erfolgen, wobei der Rollenherdofen 1 vor dem Tragrollenwechsel auf ca. 800°C abgekühlt und mit Stickstoff gespült wird.

Um den Wechsel einer Tragrolle zeitlich kurz zu halten und damit die Stillstandzeit des Rollenherdofens zu minimieren, wird der Tragrollenwechsel seitlich des Rollenherdofens 1 durchgeführt, wobei der Betrieb der einen oder der beiden Tragrollenhandhabungsvorrichtungen 16, 16' gegenüber der äußeren Umgebungsatmosphäre abgeschirmt erfolgt.

Dementsprechend wird die eine oder werden die beiden Tragrollenhandhabungsvorrichtungen 16, 16' in dem gegenüber der äußeren Umgebungsatmosphäre abgedichteten Gehäuse 17 betrieben. In einem solchen Gehäuse 17 sind dann die eine einzige oder die beiden Tragrollenhandhabungsvorrichtungen 16, 16' verfahrbar angeordnet und untergebracht. Bei einem Tragrollenwechsel mit einem solchen gasdichten Gehäuse 17, welches gegenüber der äußeren Umgebung hermetisch abgedichtet ist, wird vor dem eigentlichen Tragerollenwechsel die Antriebseinheit 6 von dem Wellenzapfen 13 der Tragrolle 2 entfernt. Durch die Schleuse 18 ist das Gehäuse 17 abgedichtet gegenüber der äußeren Atmosphäre bzw. Umgebung an den Rollenherdofen 1 andockbar bzw. ankoppelbar, wie es in Figur 2 gezeigt ist. Dabei umschließt die Schleuse 18 das erste Lagerelement 7, welches zusammen mit der zu demontierenden Tragrolle 2 aus dem Rollenherdofen 1 dann herausgezogen wird. Mit anderen Worten ist die eine oder sind die beiden Tragrollenhandhabungsvorrichtungen 16, 16' in dem gegenüber der äußeren Umgebung abgedichteten Gehäuse 17 verfahrbar angeordnet und wenigstens zum Teil durch die Schleuse 18 in der Wandung des Gehäuses 17 aus diesem ausfahrbar, um Zugriff auf die zu demontierende Tragrolle 2 zu haben. Nach dem Andocken bzw. Ankoppeln des Gehäuses 17 an dem Rollenherdofen 1, wie es in Figur 2 dargestellt ist, wird in dem Gehäuse 17 selbst auch eine Schutzgasatmosphäre eingestellt, die der Schutzgasatmosphäre des Inneren des Rollenherdofens 1 entspricht. Bei Unterbringung in dem Gehäuse 17 kann die Tragrollenhandhabungsvorrichtung 16 oder können die beiden Tragrollenhandhabungsvorrichtungen 16, 16' innerhalb des Gehäuses 17 wenigstens in zwei Raumrichtungen verfahrbar oder verkippbar ausgebildet sein, was durch die Pfeile in Figur 1 angedeutet ist. Zusätzlich ist das Gehäuse 17 bzw. die Tragrollenwechselvorrichtung 14 in wenigstens eine Raumrichtung verfahrbar ausgebildet, um seitlich an die gewünschte Tragrolle 2 heranzufahren, was durch einen Pfeil in Figur 1 angedeutet ist. Gemäß der gezeigten Ausführungsform ist die Tragrollenwechselvorrichtung 14 auf einer Fahrbühne 40 positioniert, die seitlich zum Rollenherdofen 1 entlang von Schienen 41 verfahrbar gelagert ist. Um an den Rollenherdofen 1 anzudocken, ist die Tragrollenwechselvorrichtung 14 ferner entlang von Fahrschienen 42 verfahrbar auf der Fahrbühne 40 gelagert, wobei die Fahrschienen 42 eine Bewegung der Tragrollenwechselvorrichtung 14 zum Rollenherdofen 1 hin und von diesem weg ermöglichen. Ferner ist die eine oder sind die beiden Tragrollenhandhabungsvorrichtungen 16, 16' ebenfalls in wenigstens eine Raumrichtung verfahrbar ausgebildet, um zum Andocken sich der ersten Seitenwand 8 des Rollenherdofens 1 zu nähern, was auch durch einen Pfeil angedeutet ist. Bei einem Tragrollenwechsel wird die auszuwechselnde Tragrolle 2 aus einer Öffnung 19 (siehe beispielsweise Figur 1) aus der ersten Seitenwand 8 des Rollenherdofens 1 herausgezogen.

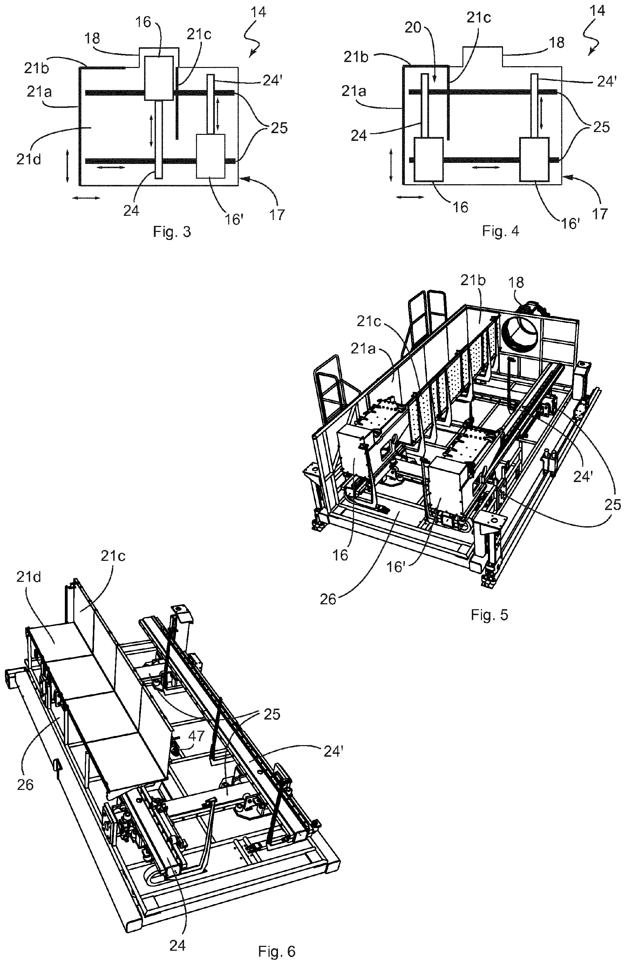

In Figur 1 ist die Tragrollenwechselvorrichtung 14 lediglich schematisch und exemplarisch dargestellt, wobei für die dort gezeigte Darstellung offen gelassen ist, ob sie ein oder zwei Tragrollenhandhabungsvorrichtungen 16, 16' verwendet. Beides ist möglich, wobei ein Tragrollenwechsel mit lediglich einer einzigen Tragrollenhandhabungsvorrichtung mehr Zeit erfordert. In den Figuren 3 bis 11, auf die nachstehend Bezug genommen wird, ist eine Ausführungsform der Tragrollenwechselvorrichtung 14 gezeigt, bei der zwei Tragrollenhandhabungsvorrichtungen 16, 16' innerhalb des Gehäuses 17 verfahrbar angeordnet sind. Dabei dient eine erste Tragrollenhandhabungsvorrichtung 16 zur Demontage und Lagerung der demontierten Tragrolle 2, wohingegen eine zweite Tragrollenhandhabungsvorrichtung 16' zur Lagerung einer zu montierenden Tragrolle 2 und zur deren Montage dient.

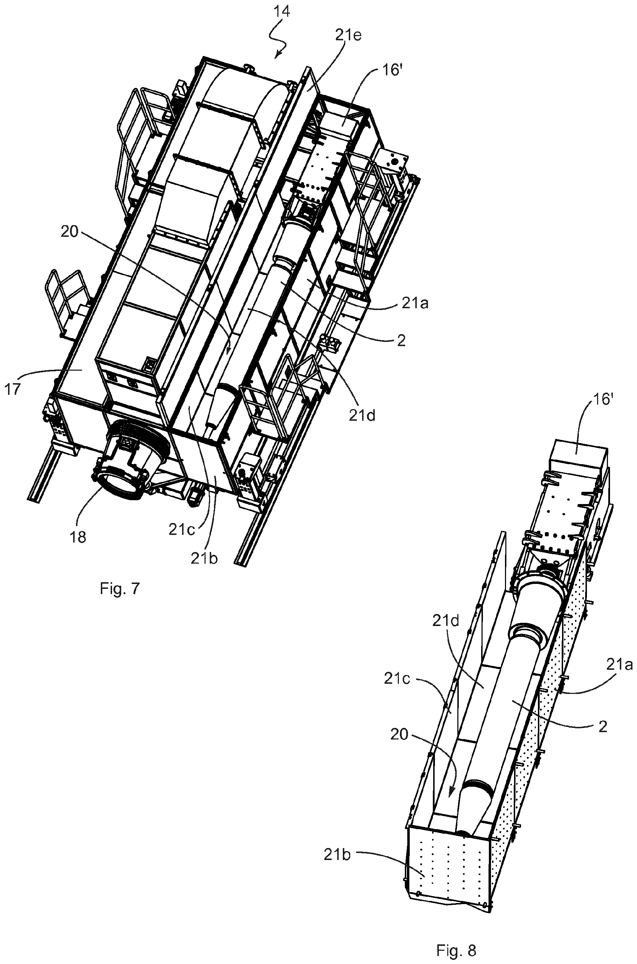

In Figur 3 ist die erste Tragrollenhandhabungsvorrichtung 16 in einer Wechselposition angeordnet, in welcher sie vor der Schleuse 18 angeordnet ist und durch diese hindurch die zu demontierende Tragrolle 2 aus dem Rollenherdofen 1 herausziehen kann, indem die erste Tragrollenhandhabungsvorrichtung 16 von der Schleuse 18 weg bewegt wird. Zum Schutz der Elektronik vor der hohen Wärmeabstrahlung der demontierten Tragrolle 2 wird die erste Tragrollenhandhabungsvorrichtung 16 in eine Abkühlposition bewegt, was in Figur 4 gezeigt ist. Die zu demontierende Tragrolle 2 ist aus Gründen der Übersichtlichkeit in den Figuren 3 bis 6 nicht dargestellt. In der Abkühlposition positioniert die erste Tragrollenhandhabungsvorrichtung 16 die demontierte Tragrolle 2 in einem Abkühlraum 20, der zum Beispiel aus den Figuren 7 und 8 ersichtlich ist. Innerhalb des Abkühlraumes 20 wird die demontierte Tragrolle 2 gedreht gelagert. Um in die Abkühlposition zu gelangen, wird die erste Tragrollenhandhabungsvorrichtung 16 aus der in Figur 3 gezeigten Position innerhalb des Gehäuses 17 zunächst von der Schleuse 18 weg bewegt und anschließend seitlich zum Rollenherdofen 1 verfahren. In der Abkühlposition ist die demontierte Tragrolle 2 von insgesamt fünf Kühlwänden 21a, 21b, 21c, 21d, 21e umgeben, die den Abkühlraum 20 ausbilden. Eine sechste Wand entfällt, da diese Position von der ersten Tragrollenhandhabungsvorrichtung 16 eingenommen wird, wenn sie in der Abkühlposition angeordnet ist. Die fünf Kühlwände 21a, 21b, 21c, 21d, 21e sind aus Figur 7 ersichtlich, wobei die Kühlwand 21e in dieser Darstellung hoch geklappt ist, um einen Blick in den Abkühlraum 20 zu ermöglichen, wo die demontierte Tragrolle 2 positioniert ist. Im Betrieb der Tragrollenwechselvorrichtung 14 ist bei einem Tragrollenwechsel selbstverständlich die Kühlwand 21e herunter geklappt und verschließt den Abkühlraum 20 gegenüber der äußeren Umgebungsatmosphäre hermetisch. In Figur 8 ist die obere Kühlwand 21e, also die Deckenkühlwand 21e, nicht dargestellt, um die erste Tragrollenhandhabungsvorrichtung 16 in der Kühlposition mit der in dieser Position in dem Kühlraum 20 angeordneten Tragrolle 2 zu zeigen. Während die erste Tragrollenhandhabungsvorrichtung 16 bei der Demontage aus der Wechselposition in die in Figur 4 gezeigte Abkühlposition bewegt wird, ist die zweite Tragrollenhandhabungsvorrichtung 16' in den Figuren 3 und 4 in einer Warteposition angeordnet. Die zweite Tragrollenhandhabungsvorrichtung 16' ist mit einer neuen Tragrolle 2 bestückt, die aber in den Figuren 3, 4 und 5 nicht gezeigt ist. Wenn die erste Tragrollenhandhabungsvorrichtung 16 in der Abkühlposition angeordnet ist, wird zum Montieren der neuen Tragrolle 2 die zweite Tragrollenhandhabungsvorrichtung 16' in die Wechselposition verfahren, wo sie dann die neue Tragrolle 2 durch die Schleuse 18 hindurch in den Rollenherdofen 1 einbringt. Es versteht sich, dass zuvor die erste Tragrollenhandhabungsvorrichtung 16 in die Abkühlposition verfahren sein muss.

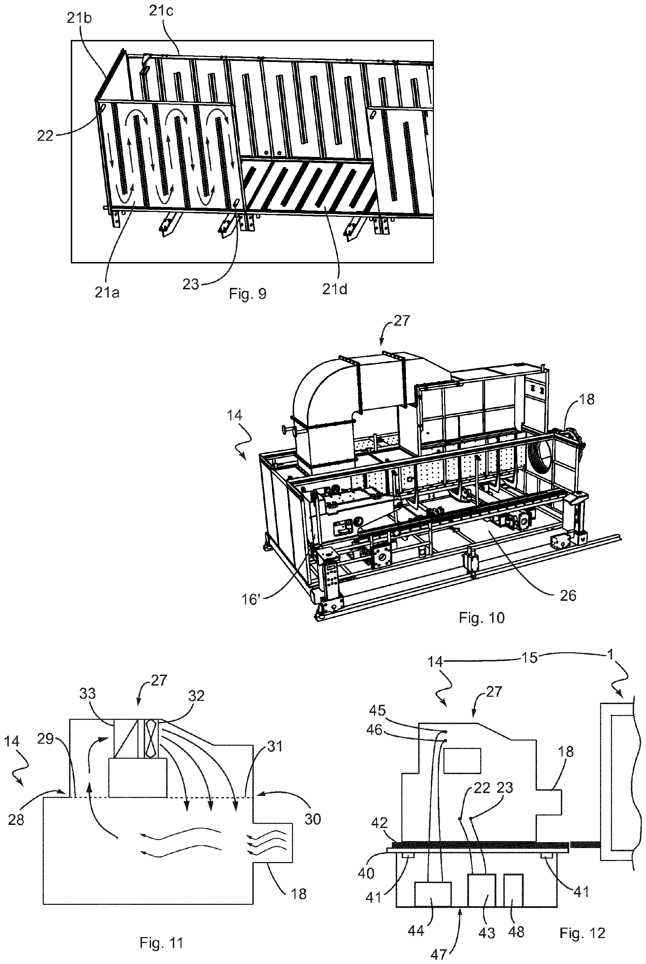

Zum Schutz von mechanischen und elektronischen Komponenten der Tragrollenwechselvorrichtung 14 wird die demontierte Tragrolle 2 in dem Abkühlraum 20 angeordnet, wie es in den Figuren 7 und 8 gezeigt und schematisch in Figur 4 angedeutet ist. Dabei können die fünf Wände 21a, 21b, 21c, 21d, 21e wärmeisoliernd ausgebildet sein, so dass die Wände 21a, 21b, 21c, 21d, 21e dafür Sorge tragen, dass die Wärmestrahlung der demontierten Tragrolle 2 nicht aus dem Abkühlraum 2 heraus auf die mechanischen und elektronischen Komponenten strahlt. In dem in den Figuren gezeigten Ausführungsbeispiel sind die Wände 21a, 21b, 21c, 21d, 21e des Abkühlraumes 20 fluidgekühlte Kühlwände. Genauer gesagt sind die Wände 21a, 21b, 21c, 21d, 21e des Abkühlraumes 20 als mit Wasser gekühlte Doppelwände ausgebildet, wie zum Beispiel aus Figur 9 ersichtlich ist. Dabei umfasst eine einzelne Wand 21a, 21b, 21c, 21d oder 21e mehrere Wandelemente. Die einzelnen Wände sind als Seitenwand (21a und 21c), Stirnwand (21b), Bodenwand (21d) und Deckenwand (21e) ausgebildet. Wie Figur 9 zeigt, wird Kühlwasser über einen Kühlwassereintrittsanschluss 22 in eine mäanderförmige Kühlkanalstruktur der Kühlwand 21a eingebracht, wobei das Kühlwasser über einen Kühlwasseraustrittsanschluss 23 aus der Kühlkanalstruktur abströmt. Beim Durchströmen der mäanderförmigen Kühlkanalstruktur der Kühlwand 21a nimmt das Kühlwasser die von der demontierten Tragrolle 2 abgestrahlte Wärme auf und transportiert sie fort. In Figur 9 ist die Durchströmung anhand von Pfeilen lediglich für ein einzelnes Wandelement der Kühlwand 21a dargestellt, wobei es ersichtlich ist, dass diese Kühlung auch bei allen übrigen Wandelementen der Kühlwände 21b, 21c, 21d, 21e auf die vorstehend beschriebene Art erfolgt. Als Kühlfluid der jeweiligen Kühlwände 21a, 21b, 21c, 21d, 21e wird Wasser verwendet. Viel bedeutender für diese Ausgestaltung der Erfindung ist aber, dass gekühltes Wasser für die Kühlung der Kühlwände 21a, 21b, 21c, 21d, 21e verwendet wird, welches von einem Kühlaggregat, das zum Beispiel auf dem Gehäuse 17 der Tragrollenwechselvorrichtung 14 oder aber auf einer mit der Tragrollenwechselvorrichtung 14 seitlich zum Rollenherdofen 1 verfahrbaren Bühne angebracht ist, heruntergekühlt wird. Dieser Kühlkreislauf, der von wenigstens einem Kühlaggregat und einem mit dem Inneren des Gehäuses in Verbindung stehenden Leitungssystem ausgebildet ist, ist nicht mit dem Ofenkühlwassersystem verbunden. Vielmehr ist dieser Kühlkreislauf autark an der Tragrollenwechselvorrichtung 14 außerhalb des Gehäuses 17 angeordnet und mittels dem aus Rohrleitungen gebildeten Leitungssystem mit den zu kühlenden Wänden 21a, 21b, 21c, 21d, 21e der Tragrollenwechselvorrichtung 14 verbunden.

Damit die heiße Tragrolle 2 nach ihrer Demontage aus dem Rollenherdofen 1 in dem Abkühlraum 20 positioniert werden kann, muss ein Zugang zu dem Abkühlraum 20 möglich sein. Zu diesem Zweck kann die innenliegende Kühlwand 21c, die eine Seitenwand des Kühlraumes 20 ist, kippbar ausgebildet sein, so dass die Kühlwand 21c aus dem Verfahrweg der demontierten Tragrolle 2 bei einer Bewegung der erste Tragrollenhandhabungsvorrichtung 16 aus der Wechselposition in die Abkühlposition nach Art einer Tür aufgeschwenkt bzw. verschwenkt wird. Die in den Figuren gezeigte Ausführungsform weist eine andere Möglichkeit auf. Bei der in den Figuren gezeigten Ausführungsform muss die Kühlwand 21c gar nicht aus dem Verfahrweg bewegt werden, weil sie dort gar nicht angeordnet ist. Denn die Kühlwand 21c ist mit der ersten Tragrollenhandhabungsvorrichtung 16 bewegungsgekoppelt, so dass die Kühlwand 21c und die Tragrollenhandhabungsvorrichtung 16 zusammen aus der Wechselposition in die Abkühlposition verfahren werden. Dies ist schematisch in den Figuren 3 und 4 gezeigt. Wie Figur 3 zeigt, ist die erste Tragrollenhandhabungsvorrichtung 16 zwischen der Kühlwand 21c und den übrigen Kühlwänden 21a und 21b angeordnet. Dem Abkühlraum 20 fehlt folglich eine Seitenwand (nämlich die Kühlwand 21c), wenn die erste Tragrollenhandhabungsvorrichtung 16 in der Wechselposition angeordnet ist. Wenn jedoch die Tragrollenhandhabungsvorrichtung 16 in die Abkühlposition (siehe zum Beispiel Figur 4) bewegt wird, dann wird die Kühlwand 21c mitbewegt und begrenzt den Abkühlraum 20, wobei die erste Tragrollenhandhabungsvorrichtung 16 zusätzlich für eine Begrenzung auf der der Stirnwand 21b gegenüberliegenden Seite sorgt.

Wie die Bewegung der Tragrollenhandhabungsvorrichtungen 16, 16' erfolgt und wie dies im Zusammenhang mit dem Abkühlraum 20 steht, wird nachstehend beschrieben. Zur Bewegung der Tragrollenhandhabungsvorrichtungen 16, 16' innerhalb des Gehäuses 17 ist für jede Tragrollenhandhabungsvorrichtung 16, 16' ein Querträger 24, 24' vorgesehen. Die jeweiligen Querträger 24, 24' erstrecken sich in Richtung der Schleuse 18, so dass die Tragrollenhandhabungsvorrichtungen 16, 16' entlang ihrer jeweiligen Querträger 24, 24' zur Schleuse 18 hin oder von dieser weg entlang des entsprechenden Querträgers 24, 24' bewegbar bzw. verfahrbar sind. Auf diese Weise kann eine defekte Tragrolle 2 von der ersten Tragrollenhandhabungsvorrichtung 16 aus dem Rollenherdofen 1 herausgezogen werden oder eine neue Tragrolle 2 von der zweiten Tragrollenhandhabungsvorrichtung 16' in den Rollenherdofen 1 eingeschoben werden, wenn die Tragrollenhandhabungsvorrichtungen 16, 16' sich in der Wechselposition befinden, die dadurch charakterisiert ist, dass die jeweilige Tragrollenhandhabungsvorrichtung 16, 16' vor der Schleuse 18 positioniert ist, wobei sie durchaus eine zurückgezogene Stellung in dem Gehäuse einnehmen kann. Die Wechselposition, Abkühlposition und Warteposition beziehen sich auf eine Stellung der Tragrollenhandhabungsvorrichtung 16, 16' in Längsrichtung des Rollenherdofens 1 und nicht auf die Distanz der Tragrollenhandhabungsvorrichtung 16, 16' zur Öffnung 19 des Rollenherdofens 1 bzw. zur Schleuse 18. Ein Positionswechsel einer jeweiligen Tragrollenhandhabungsvorrichtung 16, 16' ist mit Hilfe der Querträger 24, 24' nicht möglich.

Damit die Tragrollenhandhabungsvorrichtungen 16, 16' die einzelnen Positionen (Wechselposition, Abkühlposition und Warteposition) einnehmen und zwischen diesen wechseln können, müssen die Querträger 24, 24' innerhalb des Gehäuses 18 und in Längsrichtung des Rollenherdofens 1 verfahrbar angeordnet sein. Zu diesem Zweck ist ein Positionsträger 25, der in dem Ausführungsbeispiel von zwei Trägerelementen gebildet ist, vorgesehen. Der Positionsträger 25 erstreckt sich in Längsrichtung des Rollenherdofens 1 sowie senkrecht, d.h. rechtwinklig, zu den Querträgern 24, 24' und ist an dem Gehäuse 17 befestigt. Auf diese Weise sind die beiden Querträger 24, 24' mit den daran verfahrbar angebrachten Tragrollenhandhabungsvorrichtungen 16, 16' entlang des Positionswechselträgers 25 bewegbar, so dass die erste Tragrollenhandhabungsvorrichtung 16 zwischen der Wechselposition und der Abkühlposition verfahrbar ist und die zweite Tragrollenhandhabungsvorrichtung 16' zwischen der Warteposition und der Wechselposition verfahrbar ist. Der fest auf dem Boden 26 des Gehäuses 17 fixierte Positionswechselträger 25 ermöglicht folglich eine Bewegung der Tragrollenhandhabungsvorrichtungen 16, 16' quer zur Schleuse 18, indem die Querträger 24, 24' entlang des Positionswechselträgers 25 verfahren werden, wozu ein Fahrantrieb 47 (siehe zum Beispiel Figur 6) vorgesehen ist, der für die jeweilige Bewegung entweder des Querträgers 24 oder des Querträger 24' sorgt.

Damit die demontierte Tragrolle 2 weitestgehend vollständig in dem Abkühlraum 20 abgeordnet werden kann und möglichst vollständig von Kühlwänden umgeben ist, ist die als Bodenkühlwand fungierende Kühlwand 21d in einem Abstand zum Boden 26 des Gehäuses 17 angeordnet, so dass zumindest der Querträger 24 und der Positionswechselträger 25 zwischen dem Boden 26 des Gehäuses 17 und der Bodenkühlwand 21d des Abkühlraumes 20 angeordnet sind. Die Bodenkühlwand 21d erstreckt sich in senkrechter, d.h. in horizontaler, Richtung zum Rollenherdofen 1 betrachtet nur bis zur ersten Tragrollenhandhabungsvorrichtung 16, damit diese in der Abkühlposition angeordnet werden kann, wie aus den Figuren 3, 4 und 6 ersichtlich ist. In der Abkühlposition bildet die Tragrollenhandhabungsvorrichtungen 16 dann eine sechste Wand des Abkühlraumes 20 aus (siehe zum Beispiel Figur 5), so dass der Abkühlraum 20 im Wesentlichen geschlossen ist. Mit anderen Worten ist der die Tragrollenhandhabungsvorrichtung 16 bewegbar bzw. verfahrbar lagernde Querträger 24 in der Abkühlposition außerhalb des Abkühlraumes 20 und unterhalb der Bodenkühlwand 21d des Abkühlraumes 20 angeordnet.

Nachdem die demontierte Tragrolle 2 im Abkühlraum 20 positioniert ist, gelangt ein Teil der Ofenatmosphäre durch die Schleuse 18 in das Innere des Gehäuses 17. Die Ofenatmosphäre hat eine sehr hohe Temperatur von beispielsweise 800°C, was für die installierte Elektronik eine zerstörerische Wirkung hat. Um dieser Wirkung entgegen zu wirken, wird die Gehäuseatmosphäre, die sich mit der Ofenatmosphäre vermischt und dadurch erhitzt wird, mit Hilfe eines Abkühlsystems 27 gekühlt, wie aus den Figuren 10 und 11 zu sehen ist. Das die Gehäuseatmosphäre abkühlende Abkühlsystem 27 ist außerhalb des Gehäuses 17 angeordnet und führt bzw. leitet die abgekühlte Gehäuseatmosphäre kontinuierlich zurück in das Gehäuse 17. Das Abkühlsystem 27 ist kanalförmig ausgebildet und an einem ersten Kanalende 28 über eine Öffnung 29 mit dem Inneren des Gehäuses 17 verbunden, wobei das Abkühlsystem 27 an einem zweiten Kanalende 30 über eine auf die Schleuse 18 ausgerichtete Mündung 31 mit dem Inneren des Gehäuses 17 verbunden ist, um die abgekühlte Ofenatmosphäre wieder in das Innere des Gehäuses 17 zurück zu leiten. Das Abkühlsystem 27 ist oberhalb der beiden Tragrollenhandhabungsvorrichtungen 16, 16' im Deckenbereich des Gehäuses 17 angeordnet. Innerhalb des Abkühlsystems 27 sind ein die Gehäuseatmosphäre ansaugender und umwälzender Ventilator 32 und ein die angesaugte Atmosphäre abkühlender Wärmetauscher 33 angeordnet, wobei der Ventilator 32 stromab des Wärmetauschers 33 angeordnet ist, so dass der Ventilator 32 bereits von abgekühlter Atmosphärenluft durchströmt wird, was sich vorteilhaft auf dessen Lebensdauer auswirkt. Mit Hilfe des Abkühlsystems 27 wird die Gehäuseatmosphäre auf eine Temperatur von weniger als 60°C gekühlt, so dass keine Gefahr für die Elektronik besteht.

Figur 12 zeigt die die Tragrollenwechselvorrichtung 14 und den Rollenherdofen 1 umfassende Anordnung 1 zum Wechseln von Tragrollen in einer schematischen Seitenansicht. In dieser Darstellung sind die Schienen 41 gezeigt, entlang welcher die Fahrbühne 40, auf welcher die Tragrollenwechselvorrichtung 14 gelagert ist, seitlich zum Rollenherdofen 1 verfahrbar ist. Ebenfalls ist schematisch eine der beiden Fahrschienen 42 gezeigt, entlang welcher die Tragrollenwechselvorrichtung 14 zum Rollenherdofen 1 hin und von diesem weg verfahrbar ist, wobei die Fahrschienen 41 auf der Fahrbühne 40 montiert sind.

Ferner ist in Figur 12 der Kühlkreislauf für die Kühlwände 21a, 21b, 21c, 21d, 21e angedeutet, der von einem ersten Kühlaggregat 43 und einem ersten Leitungssystem 44 gebildet ist. Dabei wird Kühlwasser von dem ersten Kühlaggregat 43 bereitgestellt und über eine Zuführleitung zu dem Kühlwassereintrittsanschluss 22 geleitet, von wo aus das Kühlwasser dann an die Kühlwände 21a bis 21e verteilt wird und diese durchströmt. Nach dem Durchströmen der Kühlwände 21a bis 21e wird das Kühlwasser, welches sich aufgrund der Wärmeaufnahme bei der Durchströmung der Kühlwände 21a bis 21e erwärmt hat, über den Kühlwasseraustrittsanschluss 23 zu dem ersten Kühlaggregat 43 zurückgeführt, wo das Kühlwasser abgekühlt wird, bevor es wieder zu dem Kühlwassereintrittsanschluss 22 geleitet wird.

Schließlich ist in Figur 12 ein Kühlkreislauf für den Wärmetauscher 33 gezeigt, der ein zweites Kühlaggregat 44 aufweist, welches den Wärmetauscher 33 mit abgekühltem Kühlfluid versorgt, um die Atmosphäre im Inneren des Gehäuses 17 auf höchstens 60°C herunter zu kühlen. Dabei wird das Kühlfluid über einen Kühlfluideintrittsanschluss 45 dem Wärmetauscher 33 zugeführt und über einen Kühlfluidaustrittsanschluss 46 zurück zum zweiten Kühlaggregat 44 geleitet, wo das erwärmte Kühlfluid mit Hilfe des zweiten Kühlaggregats 44 abgekühlt und anschließend wieder zu dem Wärmetauscher 33 geleitet wird.

Bei der Anordnung 15 in Figur 12 sind die beiden Kühlaggregate 43 und 44 auf einer unterhalb der Fahrbühne 40 angeordneten, abgehängten Plattform 47 positioniert, auf der zusätzlich wenigstens ein Schaltschrank 48 für die Steuerung und/oder Signalverarbeitung angeordnet ist. Die beiden Kühlaggregate 43, 44 sind seitlich zum Rollenherdofen 1 zusammen mit der Fahrbühne 40 verfahrbar. Jedoch werden die Kühlaggregate 43, 44 nicht zum Rollenherdofen 1 hin und von diesem Weg bewegt, da die abgehängte Plattform 47 eine solche Bewegung nicht zulässt. Daher sind die Leitungen zu den jeweiligen Eintrittsanschlüssen 22, 45 und den jeweiligen Austrittsanschlüssen 23, 46 in ihrer Länge flexibel ausgebildet und/oder weisen eine ausreichende Länge auf, damit die Leitungsverbindung zu den Anschlüssen auch während des Verfahrens der Tragrollenwechselvorrichtung 14 auf der Fahrbühne 40 relativ zu der Plattform 47 gewährleistet ist. Statt der zwei Kühlaggregate 43, 44, die statt unterhalb auch oberhalb oder seitlich der Tragrollenwechselvorrichtung 14 positioniert sein können, kann auch nur ein einziges Kühlaggregat zur Versorgung des Wärmetauschers 33 und der Kühlwände 21a bis 21e mit Kühlwasser vorgesehen sein, solange sichergestellt ist, dass das eine Kühlaggregat einen Kühlkreislauf aufrechterhalten kann. Dieser Kühlkreislauf ermöglicht einen selbständigen Betrieb der Tragrollenwechselvorrichtung 14, ohne dass ein flexibler Wasserleitungsanschluss mit der seitlich zum Rollenherdofen 1 verfahrbaren Tragrollenwechselvorrichtung 14 vorhanden sein muss. Zusammenfassend ist vorstehend die erfindungsgemäße Tragrollenwechselvorrichtung 14 zum Wechseln einer Tragrolle 2 des Rollenherdofens 1 beschrieben worden. Dabei umfasst die Tragrollenwechselvorrichtung 14 das gegenüber der äußeren Umgebungsatmosphäre abdichtbare Gehäuse 17, das die an den Rollenherdofen 1 ankoppelbare Schleuse 18 aufweist, über die ein Zugang unter Ausschluss der Umgebungsatmosphäre auf eine zu demontierende Tragrolle 2 des Rollenherdofens 1 vom Inneren des Gehäuses 17 aus möglich ist. Ferner ist wenigstens eine zum Demontieren und Montieren von Tragrollen 2 ausgebildete Tragrollenhandhabungsvorrichtung 16, 16' innerhalb des Gehäuses 17 verfahrbar angeordnet und zumindest teilweise durch die Schleuse 18 hindurch aus dem Gehäuse 17 ausfahrbar ausgebildet. Das Gehäuse 17 weist den zur Abkühlung einer demontierten Tragrolle 2 ausgebildeten Abkühlraum 20 auf, wobei die wenigstens eine Tragrollenhandhabungsvorrichtung 16 zumindest zwischen der Wechselposition, in welcher sie durch die Schleuse 18 hindurch die zu demontierende Tragrolle 2 aus dem Rollenherdofen 1 entnehmen kann, und der Abkühlposition, in welcher sie die demontierte Tragrolle 2 in dem Abkühlraum 20 positioniert, verfahrbar ausgebildet ist.

Schließlich lässt sich mittels der vorstehend beschriebenen Tragrollenwechselvorrichtung 14 das erfindungsgemäße Verfahren zum Austausch von Tragrollen 2 eines Rollenherdofens 1 durchführen, wobei die Tragrollenwechselvorrichtung 14 seitlich neben dem Rollenherdofen 1 an die Position der zu demontierenden Tragrolle 2 gefahren wird, die Tragrolle 2 von der Antriebseinheit 6 entkoppelt wird und dann die Tragrollenwechselvorrichtung 14 an den Rollenherdofen 1 an die zu demontierende Tragrolle 2 herangefahren wird, wobei eine Schleuse 18 der Tragrollenwechselvorrichtung 14 gasdicht an den Rollenherdofen 1 angekoppelt wird, und wobei dann von der in dem Gehäuse 17 verfahrbaren Tragrollenhandhabungsvorrichtung 16 die zu demontierende Tragrolle 2 über die Schleuse 18 aus dem Rollenherdofen 1 heraus in das Gehäuse 17 bewegt wird. Erfindungsgemäß wird die aus dem Rollenherdofen 1 demontierte Tragrolle 2 von der Tragrollenhandhabungsvorrichtung 16 zu einem innerhalb des Gehäuses 17 ausgebildeten Abkühlraum 20 bewegt und in dem Abkühlraum 20 positioniert.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. Beispielsweise könnte bei der Ausführungsform gemäß der Figuren 3 bis 11 auch nur eine einzige Tragrollenhandhabungsvorrichtung 16 verwendet werden, so dass nur ein Querträger vorgesehen sein muss, wodurch ein Tragrollenwechsel nach wie vor möglich wäre, jedoch nur mehr Zeit erfordert. Selbstverständlich müssten dann bei einer einzigen Tragrollenhandhabungsvorrichtung 16 eine entsprechende Vorrichtung innerhalb des Gehäuses 17 vorgesehen sein, auf der die Tragrollenhandhabungsvorrichtung 16 die demontierte Tragrolle ablegen kann, und eine weitere Vorrichtung, welche die zu montierende Tragrolle lagert. Mit Hilfe solcher zusätzlicher Vorrichtungen könnte dann die Tragrollenhandhabungsvorrichtung 16 innerhalb des Gehäuses verfahren und je nach Arbeitsgang die demontierte Tragrolle ablegen und eine neue Tragrolle zur Montage aufnehmen. Auch müssen nicht zwei Kühlaggregate 43, 44 und zwei Kühlkreisläufe zur Kühlung der Gehäuseatmosphäre und der Gehäusekühlwände vorgesehen sein, sondern nur ein einziges, entsprechend ausgelegtes und dimensioniertes Kühlaggregat, welches den Kühlwänden 21a bis 21e und dem Wärmetauscher 33 ein gekühltes Kühlfluid bereitstellt. Zur Erfindung gehört alles dasjenige, was in der Beschreibung enthalten und/oder in der Zeichnung dargestellt ist, einschließlich dessen, was abweichend von dem konkreten Ausführungsbeispiel für den Fachmann naheliegt.

## Patentansprüche

1. Tragrollenwechselvorrichtung (14) zum Wechseln einer Tragrolle (2) eines Rollenherdofens (1), aufweisend:
ein gegenüber der äußeren Umgebungsatmosphäre abdichtbares Gehäuse (17), das eine an den Rollenherdofen (1) ankoppelbare Schleuse (18) aufweist, über die ein Zugang unter Ausschluss der Umgebungsatmosphäre auf eine zu demontierende Tragrolle (2) des Rollenherdofens (1) vom Inneren des Gehäuses (17) aus möglich ist, und
wenigstens eine zum Demontieren und Montieren von Tragrollen (2) ausgebildete Tragrollenhandhabungsvorrichtung (16, 16'), die innerhalb des Gehäuses (17) verfahrbar angeordnet ist und die zumindest teilweise durch die Schleuse (18) hindurch aus dem Gehäuse (17) ausfahrbar ausgebildet ist, **dadurch gekennzeichnet, dass**
das Gehäuse (17) einen zur Abkühlung einer demontierten Tragrolle (2) ausgebildeten Abkühlraum (20) aufweist, wobei die wenigstens eine Tragrollenhandhabungsvorrichtung (16, 16') zumindest zwischen einer Wechselposition, in welcher sie durch die Schleuse (18) hindurch eine zu demontierende Tragrolle (2) aus dem Rollenherdofen (1) entnehmen kann, und einer Abkühlposition, in welcher sie die demontierte Tragrolle (2) in dem Abkühlraum (20) positioniert, verfahrbar ausgebildet ist, wobei der Abkühlraum (20) wenigstens eine fluidgekühlte Kühlwand (21a, 21b, 21c, 21d, 21e) aufweist.

2. Tragrollenwechselvorrichtung (14) nach Anspruch 1, **dadurch gekennzeichnet, dass** wenigstens eine Wand (21c) des Abkühlraumes (20) innerhalb des Gehäuses (17) verfahrbar und/oder kippbar ausgebildet ist.

3. Tragrollenwechselvorrichtung (14) nach einem der vorhergehenden Ansprüche, **dadurch gekennzeichnet, dass** wenigstens eine Wand (21c) des Abkühlraumes (20) mit der wenigstens einen Tragrollenhandhabungsvorrichtung (16) bewegungsgekoppelt ausgebildet ist und zusammen mit der wenigstens einen Tragrollenhandhabungsvorrichtung (16) zumindest zwischen der Wechselposition und der Abkühlposition verfahrbar ist.

4. Tragrollenwechselvorrichtung (14) nach einem der vorhergehenden Ansprüche, **dadurch gekennzeichnet, dass** die wenigstens eine Tragrollenhandhabungsvorrichtung (16, 16') an einem Querträger (24, 24') bewegbar gelagert ist und entlang des Querträgers (24, 24') in Richtung der Schleuse (18) und von dieser weg verfahrbar ist.

5. Tragrollenwechselvorrichtung (14) nach Anspruch 4, **dadurch gekennzeichnet, dass** der die wenigstens eine Tragrollenhandhabungsvorrichtung (16, 16') lagernde Querträger (24, 24') entlang eines Positionswechselträgers (25) verfahrbar gelagert ist, wobei der Positionswechselträger (25) an dem Gehäuse (17) befestigt ist und sich derart zur Schleuse (18) erstreckt, dass der Positionswechselträger (25) den Querträger (24, 24') mit der wenigstens einen Tragrollenhandhabungsvorrichtung (16, 16') parallel zur Schleuse (18) verfahrbar lagert.

6. Tragrollenwechselvorrichtung (14) nach Anspruch 4 oder 5, **dadurch gekennzeichnet, dass** der die wenigstens eine Tragrollenhandhabungsvorrichtung (16, 16') lagernde Querträger (24, 24') in der Abkühlposition außerhalb des Abkühlraumes (20) und/oder unterhalb einer Bodenkühlwand (21d) des Abkühlraumes (20) angeordnet ist.

7. Tragrollenwechselvorrichtung (14) nach einem der vorhergehenden Ansprüche, **dadurch gekennzeichnet, dass** eine erste Tragrollenhandhabungsvorrichtung (16) zur Demontage und Lagerung der demontierten Tragrolle (2) und eine zweite Tragrollenhandhabungsvorrichtung (16') zur Lagerung einer zu montierenden Tragrolle (2) und zur Montage der zu montierenden Tragrolle (2) innerhalb des Gehäuses (17) verfahrbar angeordnet sind,
wobei die erste Tragrollenhandhabungsvorrichtung (16) zwischen der Wechselposition und der Abkühlposition verfahrbar ausgebildet ist,
und wobei die zweite Tragrollenhandhabungsvorrichtung (16') zwischen einer Warteposition und der Wechselposition verfahrbar ausgebildet ist.

8. Tragrollenwechselvorrichtung (14) nach einem der vorhergehenden Ansprüche, **dadurch gekennzeichnet, dass** ein die Gehäuseatmosphäre abkühlendes Abkühlsystem (27) vorgesehen ist, das außerhalb des Gehäuses (17) angeordnet und an dem Gehäuse (17) befestigt ist, wobei das Abkühlsystem (27) die abgekühlte Gehäuseatmosphäre zurück in das Gehäuse (17) leitend ausgebildet ist.

9. Tragrollenwechselvorrichtung (14) nach Anspruch 8, **dadurch gekennzeichnet, dass** das Abkühlsystem (27) kanalförmig ausgebildet ist und an einem ersten Kanalende (28) über eine Öffnung (29) mit dem Inneren des Gehäuses (17) verbunden ist und an einem zweiten Kanalende (30) über eine auf die Schleuse (18) ausgerichtete Mündung (31) mit dem Inneren des Gehäuses (17) verbunden ist.

10. Tragrollenwechselvorrichtung (14) nach Anspruch 8 oder 9, **dadurch gekennzeichnet, dass** innerhalb des Abkühlsystems (27) ein die Gehäuseatmosphäre ansaugender und umwälzender Ventilator (32) und/oder ein die angesaugte Atmosphäre abkühlender Wärmetauscher (33) angeordnet sind.

11. Tragrollenwechselvorrichtung (14) nach einem der Ansprüche 1 bis 10, **dadurch gekennzeichnet, dass** außerhalb des Gehäuses (17) wenigstens ein Kühlaggregat (43, 44) angeordnet ist, welches ein Kühlfluid zumindest für den Abkühlraum (20) bereitstellt.

12. Anordnung zum Wechseln einer Tragrolle (2) eines Rollenherdofens (1), aufweisend eine Tragrollenwechselvorrichtung (14) nach einem der Ansprüche 1 bis 11 und einen Rollenherdofen (1), wobei die Tragrollenwechselvorrichtung (14) auf einer Fahrbühne (40) angeordnet ist, die seitlich zum Rollenherdofen (1) verfahrbar ist, wobei wenigstens ein Kühlaggregat (43, 44) gemeinsam mit der Fahrbühne (40) verfahrbar ausgebildet ist und einen mit der Fahrbühne (40) mitbewegten Kühlkreislauf zumindest für den Abkühlraum (20) bereitstellt.

13. Verfahren zum Austausch von Tragrollen (2) eines Rollenherdofens (1) mittels einer Tragrollenwechselvorrichtung (14), wobei die Tragrollenwechselvorrichtung (14) seitlich neben dem Rollenherdofen (1) an die Position der zu demontierenden Tragrolle (2) gefahren wird, die Tragrolle (2) von einer Antriebseinheit (6) entkoppelt wird und dann die Tragrollenwechselvorrichtung (14) an den Rollenherdofen (1) an die zu demontierende Tragrolle (2) herangefahren wird, wobei eine Schleuse (18) der Tragrollenwechselvorrichtung (14) gasdicht an den Rollenherdofen (1) angekoppelt wird, und wobei dann von einer in dem Gehäuse (17) verfahrbar angeordneten Tragrollenhandhabungsvorrichtung (16) die zu demontierende Tragrolle (2) über die Schleuse (18) aus dem Rollenherdofen (1) heraus in das Gehäuse (17) bewegt wird,
**dadurch gekennzeichnet, dass**
die aus dem Rollenherdofen (1) demontierte Tragrolle (2) von der Tragrollenhandhabungsvorrichtung (16) zu einem innerhalb des Gehäuses (17) ausgebildeten Abkühlraum (20) bewegt wird und in dem Abkühlraum (20) positioniert wird.

14. Verfahren nach Anspruch 13, **dadurch gekennzeichnet, dass** wenigstens eine Wand (21a, 21b, 21c, 21d, 21e) des Abkühlraumes (20) mit gekühltem Wasser gekühlt wird.

15. Verfahren nach Anspruch 13 oder 14, **dadurch gekennzeichnet, dass** die Gehäuseatmosphäre mit Hilfe eines Abkühlsystems (27) auf eine Temperatur von weniger als 60°C gekühlt wird.

16. Verfahren nach einem der Ansprüche 13, 14 oder 15, **dadurch gekennzeichnet, dass** die innerhalb des Abkühlraumes (20) positionierte Tragrolle (2) gedreht wird.

## Claims

1. A support roller exchange device (14) for exchanging a support roller (2) of a roller hearth furnace (1), having:
a housing (17) which can be sealed against the surrounding atmosphere, which has an airlock (18) which can be coupled to the roller hearth furnace (1), via which it is possible to access, from inside the housing (17), a support roller (2) of the roller hearth furnace (1) which is to be removed, whilst excluding the surrounding atmosphere, and
at least one support roller handling device (16, 16') designed for removing and installing support rollers (2) which is moveably arranged inside the housing (17) and which is formed so that it can be moved at least partially out of the housing (17) through the airlock (18),
**characterised in that**
the housing (17) has a cooling chamber (20) designed for cooling a support roller (2) which is to be removed, wherein the at least one support roller handling device (16, 16') is designed so that it can at least be moved between an exchange position, in which it can withdraw a support roller (2) to be removed from the roller hearth furnace (1) through the airlock (18), and a cooling position, in which it places the removed support roller (2) in the cooling chamber (20), wherein the cooling chamber (20) has at least one fluid-cooled cooling wall (21a, 21b, 21c, 21d, 21e).

2. The support roller exchange device (14) according to claim 1, **characterised in that** at least one wall (21c) of the cooling chamber (20) is formed inside the housing (17) in a moveable and/or tiltable manner.

3. The support roller exchange device (14) according to one of the preceding claims, **characterised in that** at least one wall (21c) of the cooling chamber (20) is formed as motion-coupled with the at least one support roller handling device (16) and, together with the at least one support roller handling device (16), can be moved at least between the exchange position and the cooling position.

4. The support roller exchange device (14) according to one of the preceding claims, **characterised in that** the at least one support roller handling device (16, 16') is moveably mounted on a cross-member (24, 24') and can be moved along the cross-member (24, 24') in the direction of the airlock (18) and away from it.

5. The support roller exchange device (14) according to claim 4, **characterised in that** the cross-member (24, 24') supporting the at least one support roller handling device (16, 16') is moveably mounted along a position exchange carrier (25), wherein the position exchange carrier (25) is fixed to the housing (17) and extends to the airlock (18) in such a way that the position exchange carrier (25) moveably supports the cross-member (24, 24') with the at least one support roller handling device (16, 16') parallel to the airlock (18).

6. The support roller exchange device (14) according to claim 4 or 5, **characterised in that** in the cooling position the cross-member (24, 24') supporting the at least one support roller handling device (16, 16') is arranged outside the cooling chamber (20) and/or below a bottom cooling wall (21d) of the cooling chamber (20).

7. The support roller exchange device (14) according to one of the preceding claims, **characterised in that** a first support roller handling device (16) for removing and holding the removed support roller (2) and a second support roller handling device (16') for holding a support roller (2) to be installed and for installing the support roller (2) to be installed, are moveably arranged inside the housing (17),
wherein the first support roller handling device (16) is designed so that it can move between the exchange position and the cooling position,
and wherein the second support roller handling device (16') is designed so that it can move between a waiting position and the exchange position.

8. The support roller exchange device (14) according to one of the preceding claims, **characterised in that** a cooling system (27) which cools the housing atmosphere is provided, which is arranged outside the housing (17) and fixed to the housing (17), wherein the cooling system (27) is designed so as to conduct the cooled housing atmosphere back into the housing (17).

9. The support roller exchange device (14) according to claim 8, **characterised in that** the cooling system (27) is formed as channel-shaped and is connected to the inside of the housing (17) at a first channel end (28) by an opening (29), and is connected to the interior of the housing (17) at a second channel end (30) by a mouth (31) oriented towards the airlock (18).

10. The support roller exchange device (14) according to claim 8 or 9, **characterised in that** a revolving fan (32) sucking in the housing atmosphere and/or a heat exchanger (33) cooling the sucked-in atmosphere are arranged inside the cooling system (27).

11. The support roller exchange device (14) according to one of claims 1 to 10, **characterised in that** at least one cooling unit (43, 44) is arranged outside the housing (17), which provides a cooling fluid at least for the cooling chamber (20).

12. Arrangement for exchanging a support roller (2) of a roller hearth furnace (1), having a support roller exchange device (14) according to one of claims 1 to 11, and a roller hearth furnace (1), wherein the support roller exchange device (14) is arranged on a moving platform (40) which can be moved laterally in relation to the roller hearth furnace (1), wherein at least one cooling unit (43, 44) is formed as moveable together with the moving platform (40) and provides a cooling circuit which is carried along with the moving platform (40) to at least the cooling chamber (20).

13. Method for exchanging support rollers (2) of a roller hearth furnace (1) by means of a support roller exchange device (14), wherein the support roller exchange device (14) is moved laterally beside the roller hearth furnace (1) to the position of the support roller (2) to be removed, the support roller (2) is decoupled from a drive unit (6) and then the support roller exchange device (14) is moved up to the roller hearth furnace (1) and the support roller (2) to be removed, wherein an airlock (18) of the support roller exchange device (14) is coupled to the roller hearth furnace (1) in an airtight manner and wherein the support roller (2) to be removed is then moved out of the roller hearth furnace (1) into the housing (17) via the airlock (18) by a support roller handling device (16) which is moveably arranged in the housing (17),
**characterised in that**
the support roller (2) which was removed from the roller hearth furnace (1) is moved to a cooling chamber (20) formed inside the housing (17) by the support roller handling device (16) and is placed in the cooling chamber (20).

14. The method according to claim 13, **characterised in that** at least one wall (21a, 21b, 21c, 21d, 21e) of the cooling chamber (20) is cooled by cooled water.

15. The method according to claim 13 or 14, **characterised in that** with the aid of a cooling system (27), the housing atmosphere is cooled to a temperature of less than 60°C.

16. The method according to claim 13, 14 or 15, **characterised in that** the support roller (2) which is placed inside the cooling chamber (20) is rotated.

## Revendications

1. Dispositif de changement de rouleau porteur (14) pour changer un rouleau porteur (2) d'un four à sole à rouleaux (1) comportant :
Un coffrage (17) étanchéifiable vis-à-vis de l'atmosphère ambiante extérieure, qui comporte un sas (18) pouvant être couplé au four à sole à rouleaux (1) par lequel un accès à un rouleau porteur à démonter (2) du four à sole à rouleaux (1) est possible depuis l'intérieur du coffrage (17) à l'exclusion de l'atmosphère ambiante, et
au moins un dispositif de manipulation de rouleau porteur (16,16') constitué pour le démontage et le montage de rouleaux porteurs (2), qui est disposé mobile à l'intérieur du coffrage (17) et qui est constitué pouvant être sorti au moins en partie du coffrage (17) à travers le sas (18),
**caractérisé en ce que**
le coffrage (17) comporte un compartiment de refroidissement (20) constitué pour refroidir un rouleau porteur démonté (2), au moins un dispositif de manipulation de rouleau porteur (16,16') étant constitué mobile au moins entre une position de changement dans laquelle il peut enlever du four à sole à rouleaux (1) à travers le sas (18) un rouleau porteur (2) à démonter, et une position de refroidissement, dans laquelle il positionne le rouleau porteur démonté (2) dans le compartiment de refroidissement (20), le compartiment de refroidissement (20) comportant au moins une paroi froide (21a,21b,21c,21d,21e) refroidie par du fluide.

2. Dispositif de changement de rouleau porteur (14) selon la revendication 1, **caractérisé en ce qu'**au moins une paroi (21c) du compartiment de refroidissement (20) est constituée pouvant être déplacée et/ou basculée à l'intérieur du coffrage (17).

3. Dispositif de changement de rouleau porteur (14) selon l'une quelconque des revendications précédentes, **caractérisé en ce qu'**au moins une paroi (21c) du compartiment de refroidissement (20) est constituée couplée en mouvement à au moins un dispositif de manipulation de rouleau porteur (16) et peut être déplacée avec au moins un dispositif de manipulation de rouleau porteur (16) au moins entre la position de changement et la position de refroidissement.

4. Dispositif de changement de rouleau porteur (14) selon l'une quelconque des revendications précédentes, **caractérisé en ce qu'**au moins un dispositif de manipulation de rouleau porteur (16,16') est logé mobile sur une traverse (24,24') et peut être déplacé le long de la traverse (24,24') en direction du sas (18) et éloigné de celui-ci.

5. Dispositif de changement de rouleau porteur (14) selon la revendication 4, **caractérisé en ce que** la traverse (24,24') logeant au moins un dispositif de manipulation de rouleau porteur (16,16') est logée pouvant être déplacée le long d'un support de changement de position (25), le support de changement de position (25) étant fixé au coffrage (17) et s'étendant vers le sas (18) de telle sorte que le support de changement de position (25) loge la traverse (24,24') pouvant être déplacée avec au moins un dispositif de manipulation de rouleau porteur (16,16') parallèlement au sas (18).

6. Dispositif de changement de rouleau porteur (14) selon la revendication 4 ou 5, **caractérisé en ce que** la traverse (24,24') logeant au moins un dispositif de manipulation de rouleau porteur (16,16') est disposée dans la position de refroidissement en dehors du compartiment de refroidissement (20) et/ou en dessous d'une paroi froide de fond (21d) du compartiment de refroidissement (20).

7. Dispositif de changement de rouleau porteur (14) selon l'une quelconque des revendications précédentes, **caractérisé en ce qu'**un premier dispositif de manipulation de rouleau porteur (16) pour le démontage et le logement du rouleau porteur démonté (2) et un deuxième dispositif de manipulation de rouleau porteur (16') pour le logement d'un rouleau porteur à monter (2) et pour le montage du rouleau porteur à monter (2) sont disposés mobiles à l'intérieur du coffrage (17),
le premier dispositif de manipulation de rouleau porteur (16) étant constitué mobile entre la position de changement et la position de refroidissement,
et le deuxième dispositif de manipulation de rouleau porteur (16') étant constitué mobile entre une position d'attente et la position de changement.

8. Dispositif de changement de rouleau porteur (14) selon l'une quelconque des revendications précédentes, **caractérisé en ce qu'**un système de refroidissement (27) refroidissant l'atmosphère du coffrage est prévu qui est disposé en dehors du coffrage (17) et fixé au coffrage (17), le système de refroidissement (27) étant constitué redirigeant l'atmosphère du coffrage refroidie dans le coffrage (17).

9. Dispositif de changement de rouleau porteur (14) selon la revendication 8, **caractérisé en ce que** le système de refroidissement (27) est constitué en forme de conduit et est relié à une première extrémité de conduit (28) par une ouverture (29) avec l'intérieur du coffrage (17) et est relié à une deuxième extrémité de conduit (30) par une embouchure (31) orientée vers le sas (18) avec l'intérieur du coffrage (17).

10. Dispositif de changement de rouleau porteur (14) selon la revendication 8 ou 9, **caractérisé en ce qu'**à l'intérieur du système de refroidissement (27) sont disposés un ventilateur (32) aspirant et faisant circuler l'atmosphère du coffrage et/ou un échangeur de chaleur (33) refroidissant l'atmosphère aspirée.

11. Dispositif de changement de rouleau porteur (14) selon l'une quelconque des revendications 1 à 10, **caractérisé en ce qu'**à l'extérieur du coffrage (17) est disposé au moins un groupe de refroidissement (43,44), lequel fournit un fluide de refroidissement au moins pour le compartiment de refroidissement (20).

12. Agencement pour le changement d'un rouleau porteur (2) d'un four à sole à rouleaux (1), comportant un dispositif de changement de rouleau porteur (14) selon l'une quelconque des revendications 1 à 11 et un four à sole à rouleaux (1), le dispositif de changement de rouleau porteur (14) étant disposé sur une plateforme mobile (40), qui est déplaçable latéralement vers le four à sole à rouleaux (1), au moins un groupe de refroidissement (43,44) étant constitué mobile avec la plateforme mobile (40) et fournissant un circuit de refroidissement entraîné conjointement avec la plateforme mobile (40) au moins pour le compartiment de refroidissement (20).

13. Procédé de changement de rouleaux porteurs (2) d'un four à sole à rouleaux (1) au moyen d'un dispositif de changement de rouleau porteur (14), le dispositif de changement de rouleau porteur (14) étant déplacé latéralement près du four à sole à rouleaux (1) à la position du rouleau porteur à démonter (2), le rouleau porteur (2) étant découplé d'une unité d'entraînement (6) et le dispositif de changement de rouleau porteur (14) étant approché ensuite sur le four à sole à rouleaux (1) du rouleau porteur à démonter (2), un sas (18) du dispositif de changement de rouleau porteur (14) étant couplé étanche aux gaz au four à sole à rouleaux (1) et le rouleau porteur à démonter (2) étant ensuite déplacé par un dispositif de manipulation de rouleau porteur (16) disposé mobile dans le coffrage (17) à travers le sas (18) hors du four à sole à rouleaux (1) dans le coffrage (17),
**caractérisé en ce que**
le rouleau porteur démonté (2) du four à sole à rouleaux (1) est déplacé par le dispositif de manipulation de rouleau porteur (16) vers un compartiment de refroidissement (20) constitué à l'intérieur du coffrage (17) et est positionné dans le compartiment de refroidissement (20).

14. Procédé selon la revendication 13, **caractérisé en ce qu'**au moins une paroi (21a,21b,21c,21d,21e) du compartiment de refroidissement (20) est refroidie par de l'eau fraîche.

15. Procédé selon la revendication 13 ou 14 **caractérisé en ce que** l'atmosphère du coffrage est refroidie à l'aide d'un système de refroidissement (27) à une température inférieure à 60°C.

16. Procédé selon l'une quelconque des revendications 13, 14 ou 15, **caractérisé en ce que** le rouleau porteur (2) positionné à l'intérieur du compartiment de refroidissement (20), est tourné.
